# FASCICULE DE BREVET EUROPEEN

(11) **EP 1 029 432 B1**
(45) Date de publication et mention de la délivrance du brevet: **02.01.2004**
(21) Numéro de dépôt: 00440037.0
(22) Date de dépôt: 08.02.2000
(51) Int. Cl.: A01B 49/06

(54) **Semoir**
Sämaschine
Sowing machine

(30) Priorité: 19.02.1999 FR 9902320
(43) Date de publication de la demande: 23.08.2000
(73) Titulaire: KUHN S.A., 67706 Saverne Cedex (FR)
(72) Inventeur: Kirch, Michel, 67260 Keskastel (FR)

(56) Documents cités:
- EP-A- 0 677 236
- EP-A- 0 826 296
- DE-A- 3 105 640

## Description

La présente invention se rapporte au domaine technique général des machines agricoles destinées aux opérations de travail du sol et de semis. De telles machines combinant différentes tâches lors d'un unique passage sur une parcelle sont généralement montées sur un tracteur et comprennent par exemple un semoir pneumatique ou mécanique et des organes de travail du sol animés ou statiques.

Il est connu par le document EP 0 826 296 de réaliser une machine agricole combinée pour le travail du sol et le semis comprenant :
- un cadre destiné à être accroché à un tracteur ;
- au moins un châssis relié audit cadre ;
- des organes de travail du sol montés sur le(s) châssis, lesquels sont au moins partiellement maintenus en position par au moins un organe de référence durant le travail, ledit (lesdits) organe(s) de référence étant monté(s) sur une structure porteuse correspondante articulée sur le châssis respectif ;
- au moins une barre de semis reliée audit (auxdits) châssis à l'aide d'au moins une structure de liaison du type quadrilatère ;
- au moins un dispositif d'appui relié à ladite (chaque) barre de semis et destiné à s'appuyer contre la structure porteuse de l'organe de référence correspondant de manière à limiter la profondeur de semis de ladite barre de semis.

De telles combinaisons nécessitent souvent des réglages multiples, en particulier lorsque l'utilisateur agit sur l' (les) organe(s) de référence pour travailler la terre sur une autre profondeur. Un réglage unique n'est alors pas suffisant pour conserver la même profondeur de semis et/ou pour garder la même orientation de la (des) barre(s) de semis par rapport au sol. En outre, il peut arriver, avec certains réglages correctifs de la position de la (des) barre(s) de semis que cette (ces) demière(s) ne reste (restent) pas sensiblement parallèle(s) au sol. Ceci peut notamment être gênant lorsque la machine combinée, accrochée au relevage d'un tracteur, est abaissée après une manoeuvre en bout de champ. En effet, les socs de semis, ou plus précisément les ouvertures d'expulsion des graines de ceux-ci, risquent d'être obstruées, notamment par de la terre, si lesdits socs de semis viennent en contact avec le sol avec une inclinaison inappropriée.

L'objet de la présente invention vise donc à réaliser une machine agricole combinée pour travailler le sol et semer ne présentant pas les inconvénients de l'état de la technique, c'est-à-dire dans laquelle le nombre d'opérations de réglage lorsque les conditions de travail et/ou de semis changent, est réduit.

Un autre objet de la présente invention vise à optimiser la position et l'orientation de la (des) barre(s) de semis et ce pour tous les réglages possibles de la machine agricole combinée.

Les objets assignés à la présente invention sont atteints à l'aide d'un (des) dispositif(s) d'appui relié(s) à ladite (chaque) barre de semis et conçu(s) de manière à réaliser un (des) point(s) d'appui capable(s) de coulisser sur une (des) portion(s) de la structure porteuse de l'organe de référence correspondant à ladite barre de semis.

D'autres caractéristiques et avantages de l'invention ressortiront de la description détaillée figurant ci-après et faite en référence aux dessins annexés donnés à titre d'exemple non limitatif et dans lesquels :
- la **figure 1** représente une vue partielle de dessus d'un exemple de réalisation d'une machine agricole combinée conforme à l'invention ;
- la **figure 2** représente une vue de côté de la machine agricole combinée de la figure 1, placée dans une première position de travail ;
- la **figure 3** représente une vue de côté de la machine agricole combinée de la figure 1, placée dans une deuxième position de travail ;
- la **figure 4** représente, en vue de côté, la machine agricole combinée des figures 1 à 3 avec une barre de semis en position soulevée ;
- la **figure 5** représente, en vue de dessus, la machine agricole combinée des figures 1 à 4 placée en position repliée de transport.

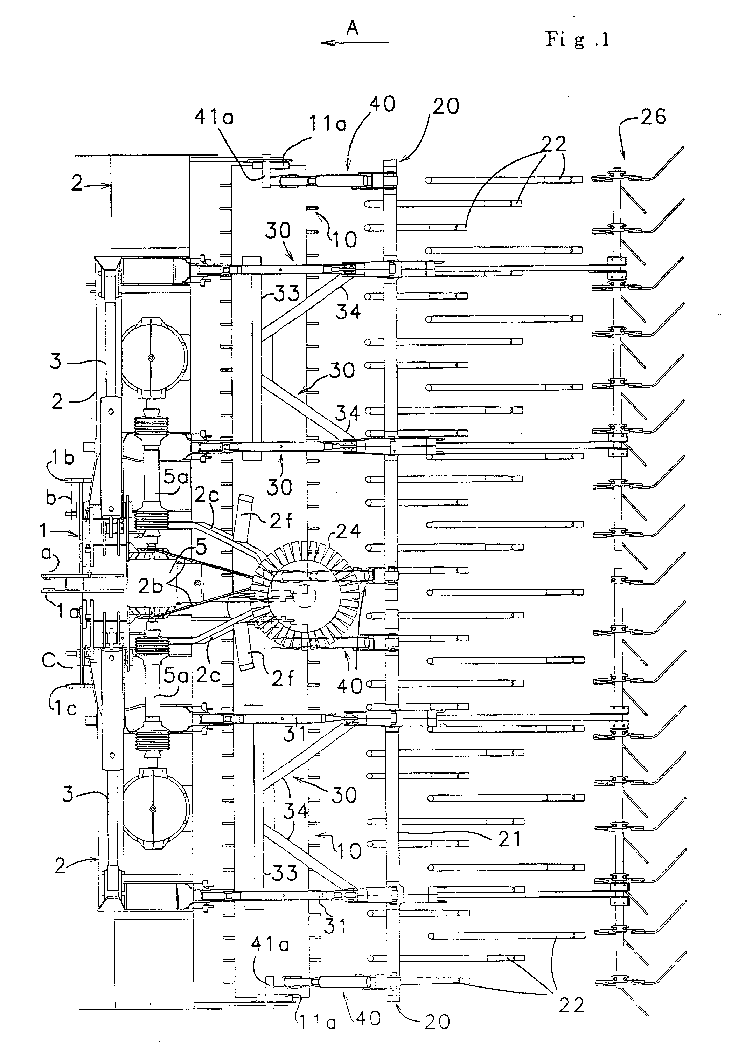

La figure 1 montre un exemple de réalisation d'une machine agricole combinée conforme à l'invention. Cette dernière comporte un cadre (1) pourvu d'un système d'attelage trois points (a-b-c), lequel permet d'accrocher la machine agricole combinée au relevage d'un tracteur non représenté. Des chapes (1a, 1b, 1c) ou autres dispositifs d'attelage peuvent être prévus. Dans la suite, la machine agricole combinée conforme à l'invention et représentée aux figures est une machine repliable en deux parties. La présente invention ne se limite pas cependant à ce mode particulier de réalisation. Une machine agricole combinée non repliable et/ou rigide ne sort pas du cadre de la présente invention. Le cadre (1) est relié, via des articulations d'axes dirigés selon le sens d'avance (A), à deux châssis (2).

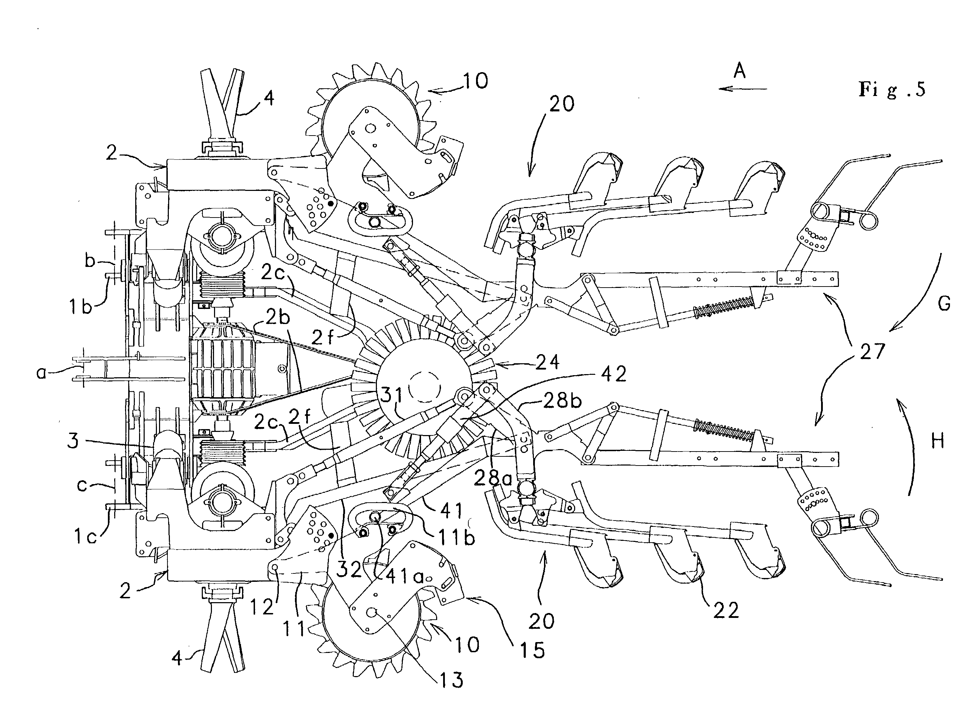

Ces deux parties sont, par exemple, repliables vers le haut pour le transport sur route (figure 5). La position repliée est obtenue à l'aide de vérins hydrauliques de repliage (3) articulés chacun entre le cadre (1) et le châssis (2) correspondant.

Chaque châssis (2) est d'une part pourvu d'organes de travail du sol et d'autre part associé à un organe de référence (10) et à une barre de semis (20). Cette dernière est reliée au châssis (2) correspondant à l'aide d'une structure de liaison (30). La machine agricole combinée conforme à l'invention comporte également au moins un dispositif d'appui (40) permettant de positionner chaque barre de semis (20) en hauteur par rapport à l'organe de référence (10) correspondant.

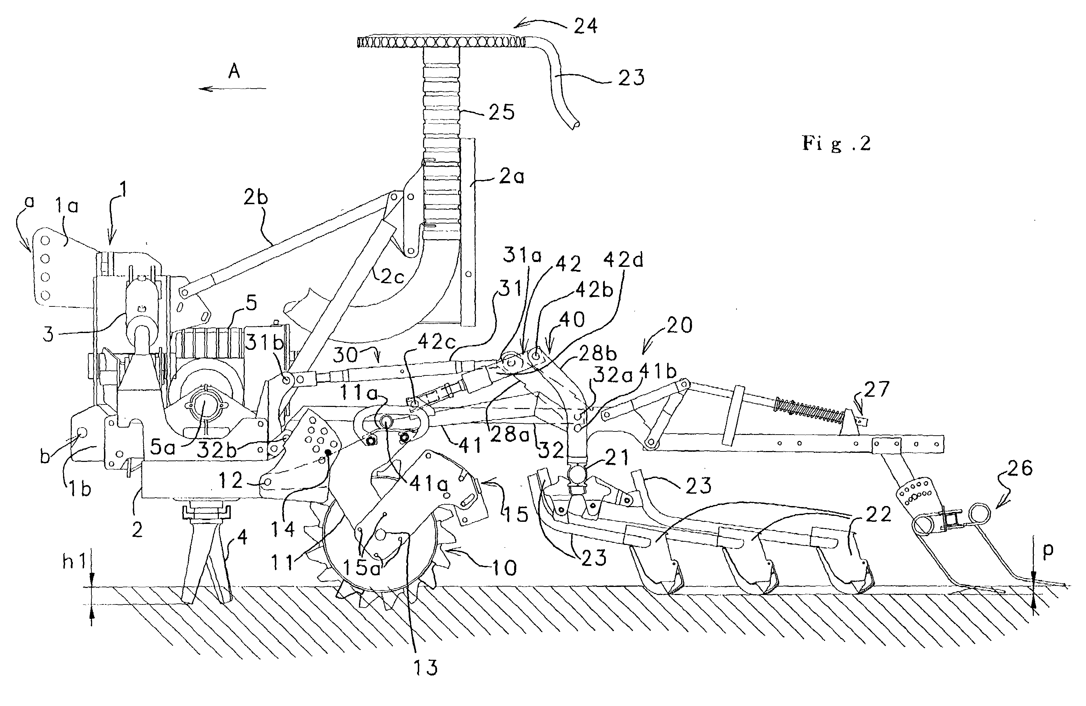

La figure 2 représente, en vue de côté, la machine agricole combinée conforme à l'invention dans une première position de travail. Chaque châssis (2) est constitué par une poutre de herse rotative et les organes de travail sont des outils de herse rotative (4) entraînés en rotation autour d'axes verticaux. Un carter (5) monté sur le cadre (1) permet de transmettre à chaque châssis (2) le mouvement de rotation issu de la prise de force du tracteur. Cette transmission est obtenue à l'aide d'un arbre de transmission (5a) respectif. Un tel entraînement est connu en soi.

Chaque organe de référence (10), par exemple constitué d'un rouleau de rappuyage, est monté sur le châssis (2) correspondant à l'aide d'une structure porteuse (11). Cette dernière est articulée sur ledit châssis (2) avec une articulation (12) localisée de part et d'autre de l'organe de référence (10). L'articulation (12) présente un axe transversal à la direction d'avance (A). C'est cette structure porteuse (11) qui supporte l'axe de rotation (13) dudit organe de référence (10) et qui permet de définir la position de celui-ci par rapport au châssis (2) correspondant. A cet effet, ledit châssis (2) est pourvu d'un moyen d'arrêt (14) contre lequel la structure porteuse (11) vient en appui lorsque l'organe de référence (10) roule sur le sol. Le moyen d'arrêt (14) est de préférence déplaçable dans différentes positions et est réalisé avec tous moyens connus.

Ainsi, lorsque l'utilisateur abaisse la machine agricole combinée avec le relevage du tracteur, chaque organe de référence (10) définit la profondeur de travail (h₁, h₂), c'est-à-dire la pénétration dans le sol des outils (4) correspondants. Un tel mécanisme de réglage est déjà connu.

La structure porteuse (11) comporte également une pièce additionnelle (15) comportant des moyens de nettoyage de l'organe de référence (10). Dans l'exemple représenté aux figures, il s'agit d'un décrotteur du rouleau de rappuyage. La pièce additionnelle (15) est par exemple fixée sur la structure porteuse (11) avec tout moyen connu, par exemple des vis (15a).

Chaque barre de semis (20) est constituée d'une traverse (21) s'étendant transversalement à la direction d'avance (A). La traverse (21 ) supporte des socs de semis (22), lesquels sont reliés par l'intermédiaire de conduits (23) (partiellement représentés) à une tête de distribution (24) d'un semoir pneumatique. La tête de distribution (24) permet de répartir les graines à semer dans chaque conduit (23) et soc de semis (22) correspondants. La tête de distribution (24) est bien sûr alimentée de façon connue par un tuyau (25) en communication avec une trémie (non représentée aux figures) montée par exemple sur un relevage frontal du tracteur.

La tête de distribution (24) et le tuyau (25) sont de préférence montés ou fixés sur un cadre supplémentaire (2a) solidarisé avec le cadre (1) à l'aide de bras de liaison (2b, 2c).

Les conduits (23) ne sont pas représentés dans leur intégralité afin de ne pas surcharger inutilement les figures. Le nombre de ces conduits (23) dépend du nombre de socs de semis (22) montés sur les traverses (21). Ces dernières servent également de support à une herse de recouvrement (26) correspondante destinée à suivre les socs de semis (22). Des moyens de montage et de réglage (27) appropriés de chaque herse de recouvrement (26) peuvent également être prévus. Selon un autre mode de réalisation de la machine agricole combinée conforme à l'invention, le semoir pneumatique est remplacé par un semoir mécanique.

Chaque barre de semis (20) est liée au châssis (2) correspondant par l'intermédiaire d'une structure de liaison (30) autorisant à ladite barre de semis (20) de se déplacer en hauteur par rapport audit châssis (2) et par rapport à l'organe de référence (10) correspondant.

Chaque structure de liaison (30) est constituée de quatre bielles (31, 32), chaque paire formant un quadrilatère déformable dans un plan d'extension sensiblement vertical et sensiblement dirigé selon la direction d'avance (A).

Les bielles (31, 32) présentent, à titre d'exemple, un point de convergence fictif (non représenté) situé à une certaine distance devant la machine agricole combinée de manière à réaliser un centre instantané de rotation relativement éloigné de la barre de semis (20). Avantageusement ce centre instantané de rotation se situe dans le voisinage de la surface du sol ou mieux à une certaine distance sous la surface du sol.

Chaque traverse (21) se prolonge vers le haut par au moins deux premiers montants (28a) sur lesquels sont articulées les bielles (31, 32) par leur extrémité arrière respective, et ce avec des articulations (31a, 32a). Les extrémités avant de chaque bielle (31, 32) est, quant à elle, articulée sur le châssis (2) correspondant ou sur une pièce solidaire dudit châssis (2) avec une articulation (31b, 32b). Avantageusement, la bielle supérieure (31) peut être réalisée avec un tirant réglable en longueur pour éventuellement modifier l'orientation de la barre de semis (20) correspondante par rapport au sol. La trajectoire de chaque la barre de semis (20) est déterminée par sa structure de liaison (30), en l'occurrence un quadrilatère faiblement convergent. La position éloignée du centre instantané de rotation de la barre de semis (20) impartit à celle-ci une succession de positions de travail pour lesquelles les plans d'extension des socs de semis (22) restent sensiblement parallèles entre eux c'est-à-dire sensiblement parallèle à la surface du sol.

Selon l'exemple de réalisation représenté aux figures, chaque structure de liaison (30) présente deux paires de bielles (31, 32), les bielles inférieures (32) étant reliées entre elles par des tiges de rigidification (33, 34). Ceci procure une stabilité accrue pour la liaison entre la barre de semis (20) correspondante et le châssis (2) respectif.

La machine agricole combinée conforme à l'invention comporte également deux dispositifs d'appui (40) reliés à la barre de semis (20) correspondante et destinés à s'appuyer contre la structure porteuse (11) de l'organe de référence (10) respectif de manière à limiter la profondeur de semis (p) de ladite barre de semis (20). Chaque dispositif d'appui (40) est relié à sa barre de semis (20) correspondante grâce un second montant (28b) s'étendant sensiblement vers le haut à partir de la traverse (21). Les seconds montants (28b), solidaires de la traverse (21), sont décalés latéralement par rapport aux premiers montants (28a). Dans l'exemple représenté, un second montant (28b) s'étend dans le voisinage de chaque extrémité de la traverse (21) correspondante.

Chaque dispositif d'appui (40) est donc constitué d'un second montant (28b) solidaire de la barre de semis (20) correspondante, d'un bras d'appui (41) d'une part articulé sur le second montant (28b) et d'autre part en appui sur la structure porteuse (11) de l'organe de référence (10) correspondant et d'un moyen de positionnement (42) articulé entre le bras d'appui (41) et le second montant (28b). Le bras d'appui (41) est lié au second montant (28b) par une articulation (41b). Le moyen de positionnement avant (42), quant à lui, est articulé sur le second montant (28b) avec une articulation (42b) et sur le bras d'appui (41) avec une articulation (42c). Le moyen de positionnement (42) est avantageusement de longueur réglable et/ou variable.

Le bras d'appui (41) vient en appui sur la structure porteuse (11) par son extrémité libre (41a). Dans l'exemple représenté, cette extrémité libre (41a) est avantageusement coudée. Cette extrémité coudée (41a) présente par exemple une forme sensiblement cylindrique et s'étend sensiblement horizontalement et orthogonalement à la direction d'avance (A). La structure porteuse (11), quant à elle, présente une portion (11a) sur laquelle l'extrémité coudée (41a) du bras d'appui (41) est susceptible de coulisser. L'extrémité coudée (41a) et la portion (11a) de la structure porteuse (11) définissent donc un point d'appui susceptible de se déplacer le long de ladite portion (11a). La machine agricole combinée représentée aux figures présente, comme dit, un dispositif d'appui (40) près de chaque extrémité de la traverse (21) correspondante. Cette machine étant repliable en deux parties, elle comporte donc quatre dispositifs d'appui (40).

Le déplacement en hauteur d'une barre de semis (20) par rapport à l'organe de référence (10) correspondant est guidé par la structure de liaison (30) respective et la course d'un tel déplacement est définie ou limitée par le(s) dispositif(s) d'appui (40) correspondant(s). C'est plus précisément la longueur du moyen de positionnement (42) qui détermine la position relative de la barre de semis (20) correspondante par rapport à l'organe de référence (10) respectif. C'est donc la longueur du moyen de positionnement (42) qui détermine la profondeur de semis (p). Le déplacement vers le bas (le sol) du quadrilatère formé par les bielles (31, 32) est bloqué à une hauteur donnée, correspondant à la profondeur de semis (p) souhaitée, par le triangle (28b-41-42) et l'appui de l'extrémité coudée (41a) des bras d'appui (41) sur les portions (11a) correspondantes de la structure porteuse (11) de l'organe de référence (10) correspondant. C'est la déformation de ce triangle, c'est-à-dire l'accroissement ou la réduction de la longueur du moyen de positionnement (42) qui permet de modifier la profondeur de semis (p).

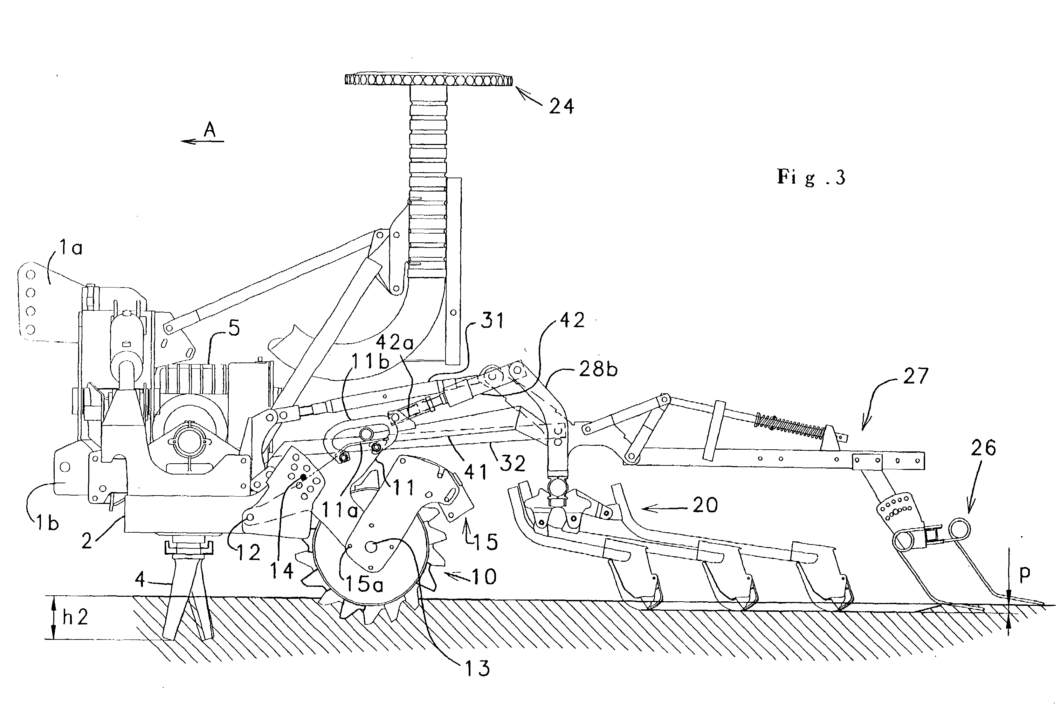

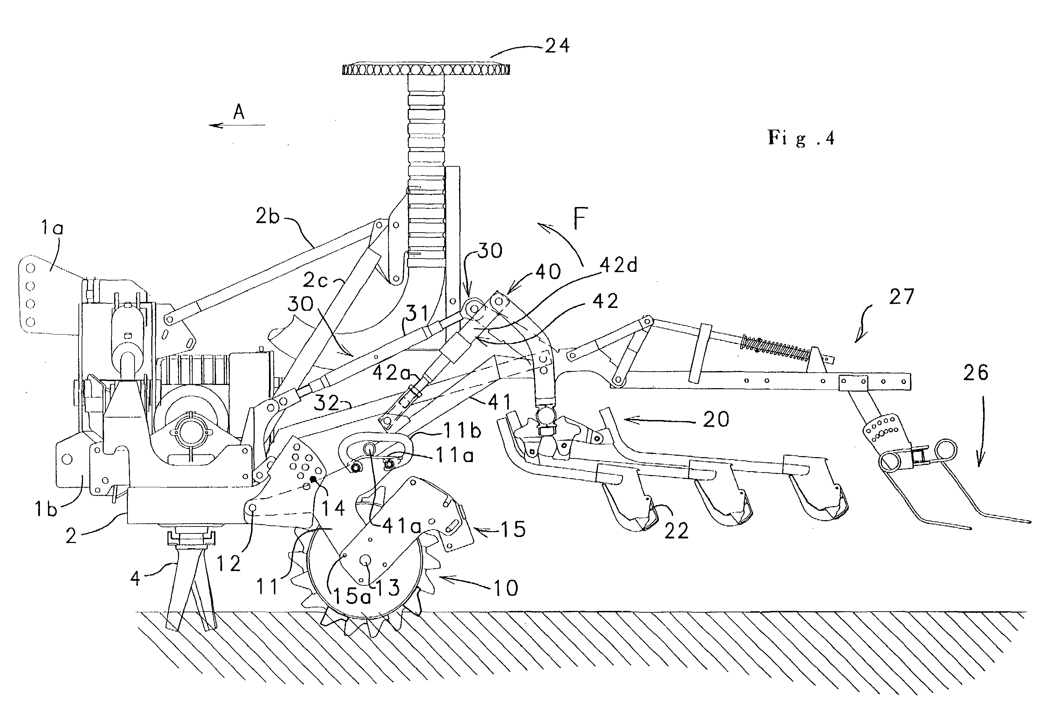

La machine agricole combinée, selon un exemple de réalisation conforme à l'invention, comporte également un moyen de commande servant à relever et à abaisser une barre de semis (20) par rapport à l'organe de référence (10) correspondant. Dans l'exemple de réalisation représenté aux figures, le moyen de positionnement (42) du (de chaque) dispositif d'appui (40) est constitué d'un vérin hydraulique (42d) pour également réaliser le moyen de commande. Avec un (de) tel(s) dispositif(s) d'appui (40), l'extension du (des) vérin(s) hydraulique(s) (42d) permet de soulever la barre de semis (20) correspondante par rapport à l'organe de référence (10) respectif, les bras d'appui (41) restant chacun en appui sur la portion (11a) correspondante. La structure de liaison (30), du type quadrilatère se déforme vers le haut et guide ce soulèvement. Alors que dans les différentes positions de travail, les plans d'extension des socs de semis (22) restent sensiblement parallèles entre eux, il apparaît, en position finale du soulèvement (figure 4), que les socs de semis (22) de la rangée arrière sont quelque peu plus éloignés du sol que ceux de la rangée avant. Ceci résulte de la position du centre instantané de rotation du quadrilatère formant la structure de liaison (30). Chaque barre de semis (20) et la herse de recouvrement (26) correspondante présentent alors un garde au sol confortable. Une contraction des vérins hydrauliques (42d) permet d'abaisser à nouveau la barre de semis (20) correspondante par rapport à l'organe de référence (10) respectif. La longueur minimale du moyen de positionnement (42) détermine donc la profondeur de semis (p) et sa longueur maximale détermine la position relevée de ladite barre de semis (20) vis-à-vis dudit organe de référence (10). Avantageusement, chaque vérin hydraulique (42d) (moyen de positionnement (42)) peut comporter une tige (42a) de longueur réglable (figures 3 et 4 notamment). Dans la mesure où la course de ce vérin hydraulique (42d) reste constante, il est ainsi aisé d'agir sur la position relative de la barre de semis (20) correspondante par rapport à l'organe de référence (10) respectif et par conséquent sur la profondeur de semis (p). Le soulèvement de ladite barre de semis (20) par rapport audit organe de référence (10) peut être intéressant lors de manoeuvres en bout de parcelle ou pour effectuer uniquement une opération de travail du sol (sans semis) avec la machine agricole combinée conforme à l'invention. Ceci peut s'avérer utile pour des préparations spécifiques d'un lit de semence. Les moyens de commande en l'occurrence les vérins hydrauliques (42d) sont donc intégrés aux dispositifs d'appui (40) correspondants.

La figure 3 représente la machine agricole conforme à l'invention avec un réglage différent de la profondeur de travail des outils (4). En effet, le moyen d'arrêt (14) a été déplacé vers le haut de manière à permettre à l'organe de référence (10) et à la structure porteuse (11) correspondants de pivoter légèrement autour de l'articulation (12). Ceci se traduit par une pénétration accrue des outils (4) dans le sol correspondant à une profondeur de travail (h₂) desdits outils (4) lorsque chaque structure porteuse (11) vient en appui sous le moyen d'arrêt (14) correspondant. Avec un tel réglage, l'extrémité coudée (41a) de chaque bras d'appui (41) a coulissé sur la portion (11a) correspondante lors du pivotement de la structure porteuse (11). Ceci permet audit bras d'appui (41) de remplir pleinement sa fonction et surtout de conserver la même profondeur de semis (p) pour la barre de semis (20).

Chaque portion (11a) profilée présente avantageusement une surface d'appui dont la forme et/ou l'inclinaison permet de transmettre de façon précise lors du pivotement de la structure porteuse (11) de l'organe de référence (10) respectif, un mouvement correctif à la barre de semis (20) correspondante. Ce mouvement correctif est obtenu grâce au coulissement de l'extrémité coudée (41a) de chaque bras d'appui (4 1 ) sur la portion (11a) correspondante.

Une modification du réglage d'un organe de référence (10) par rapport au châssis (2) correspondant n'a par conséquent aucune incidence sur la profondeur de semis (p). La forme et/ou l'inclinaison de chaque portion (11a) est déterminée de manière à ce que la traverse (21) correspondante présente, au travail, une hauteur constante par rapport à la surface du sol détectée par l'organe de référence (10) respectif.

Tous ces avantages sont également obtenus lorsque l'organe de référence (10) est remplacé par un autre organe de référence. Ceci est le cas, par exemple, quand le rouleau de rappuyage est remplacé par un rouleau de rappuyage de diamètre différent.

Par ailleurs, le déplacement de la barre de semis (20) par rapport à l'organe de référence (10) correspondant suite à un réglage en hauteur de ce dernier, n'altère pas ou quasi pas le parallélisme du plan d'extension des socs de semis (22) par rapport au sol, et ce grâce à la (aux) structure(s) de liaison (30) du type quadrilatère faiblement convergent.

Un tel quadrilatère peut aussi, selon une autre réalisation conforme à l'invention, être un parallélogramme.

La machine agricole combinée conforme à l'invention et telle que représentée aux figures comporte donc deux barres de semis (20) dont la position est corrigée automatiquement lorsque l'organe de référence (10) correspondant est déplacé en hauteur. Ceci est un avantage considérable pour l'utilisateur, car il économise une opération de réglage souvent délicate et coûteuse en temps.

La machine agricole combinée conforme à l'invention présente également un moyen de retenu (11b) empêchant un écartement entre une extrémité coudée (41a) et la portion (11a) correspondante. Sans ces moyens de retenu (11b), un tel écartement serait en effet possible avec une machine agricole combinée telle que celle représentée aux figures, c'est-à-dire réalisée en deux parties repliables verticalement pour le transport sur routes. En position verticale, les extrémités coudées (41a) correspondantes d' une barre de semis (20) retiennent celle-ci et empêchent un mouvement relatif entre ladite barre de semis (20) et le châssis (2) correspondant (figure 5). De tels mouvements généreraient en effet, lors du transport, des chocs nuisibles, à termes, pour les diverses articulations et pour la stabilité de la machine agricole combinée conforme à l'invention.

La figure 4 représente la machine agricole combinée conforme à l'invention avec chaque barre de semis (20) en position relevée par rapport à l'organe de référence (10) correspondant. La profondeur de travail des outils (4) est déterminée par les organes de référence (10) lorsque le système de relevage du tracteur (non représenté) est abaissé pour positionner la machine dans sa position de travail.

Chaque extrémité coudée (41a), en appui sur la portion (11a) correspondante se trouve sensiblement dans la même position par rapport à ladite portion (11a) que celle représentée à la figure 2. Ainsi, l'extension des vérins hydrauliques (42d) fait basculer la structure de liaison (30) de la barre de semis (20) respective selon la direction (F). Ladite barre de semis (20) est alors entraînée vers le haut pour être dégagée du sol. Lorsque les vérins hydrauliques (42d) comportent une tige de longueur réglable (42a), l'orientation ou l'inclinaison du plan d'extension des socs de semis (22) peut être modifiée ou corrigée.

Le soulèvement de chaque barre de semis (20) par rapport à l'organe de référence (10) correspondant, tel que représenté à la figure 4, permet à l'utilisateur certes d'effectuer les manoeuvres en bout de parcelles, mais également d'effectuer exclusivement une opération de travail du sol.

Par ailleurs, un tel soulèvement peut être avantageux avant le repliage vertical des deux châssis (2) dans la mesure où l'on réduit l'encombrement de la machine agricole combinée.

La figure 5 représente la machine agricole combinée, en position de transport et en vue de dessus. Les bras de liaison (2c) sont pourvus chacun d'une butée mécanique (2f) contre laquelle l'une des bielles inférieures (32) de la structure de liaison (30) correspondante peut venir en appui lorsque le châssis (2) est complètement replié vers le haut pour le transport.

Ces butées mécaniques (2f) interdisent aux barres de semis (20) de basculer l'une vers l'autre et/ou de heurter la tête de distribution (24). Les dimensions de ces butées mécaniques (20) sont choisies pour réduire au mieux les déplacements - possibles et les chocs nuisibles qui en découlent - des sous-ensembles constitués par une barre de semis (20), la structure porteuse (11) correspondante et l'organe de référence (10) respectif.

Outre les avantages déjà cités la machine agricole combinée conforme à l'invention présente en sus l'avantage de ne pas transmettre, à une barre de semis (20), en travail, les déplacements et les chocs subis par le châssis (2) correspondant. La profondeur de semis (p) n'est donc pas affectée par les déplacements et ces chocs.

## Revendications

1. Machine agricole combinée pour le travail du sol et le semis comprenant :
- un cadre (1) destiné à être accroché à un tracteur ;
- au moins un châssis (2) relié audit cadre (1) ;
- des organes de travail du sol montés sur le(s) châssis (2), lesquels sont au moins partiellement maintenus en position par au moins un organe de référence (10) durant le travail, ledit (lesdits) organe(s) de référence (10) étant monté(s) sur une structure porteuse (11) correspondante articulée sur le châssis (2) respectif ;
- au moins une barre de semis (20) reliée audit (auxdits) châssis (2) à l'aide d'au moins une structure de liaison (30) du type quadrilatère ;
- au moins un dispositif d'appui (40) relié à ladite (chaque) barre de semis (20) et destiné à s'appuyer contre la structure porteuse (11) de l'organe de référence (10) correspondant de manière à limiter la profondeur de semis de ladite barre de semis (20),
***caractérisée en ce* que** le (les) dispositif(s) d'appui (40) relié(s) à ladite (chaque) barre de semis (20) est (sont) conçu(s) de manière à réaliser un (des) point(s) d'appui capable(s) de coulisser sur une (des) portion(s) (11a) de la structure porteuse (11) de l'organe de référence (10) correspondant à ladite barre de semis (20).

2. Machine agricole combinée selon la revendication 1, ***caractérisée en ce* que** le (les) point(s) d'appui est (sont) susceptible(s) de coulisser sur une (des) portion(s) (11a) profilées(s) de ladite structure porteuse (11).

3. Machine agricole combinée selon la revendication 1 ou 2, ***caractérisée en ce* que** ladite (chaque) barre de semis (20) comporte un dispositif d'appui (40) de part et d'autre de sa structure de liaison (30).

4. Machine agricole combinée selon l'une quelconque des revendications 1 à 3, ***caractérisée en ce* que** le dispositif d'appui (40) est constitué d'un montant (28b) solidaire de la barre de semis (20), d'un bras d'appui (41) d'une part articulé sur ledit premier montant (28b) et d'autre part en appui contre la structure porteuse (11) de l'organe de référence (10) correspondant, et d'un moyen de positionnement (42) articulé entre le bras d'appui (41) et le montant (28b).

5. Machine agricole combinée selon la revendication 4, ***caractérisée en ce* que** le moyen de positionnement (42) est un tirant réglable en longueur.

6. Machine agricole combinée selon l'une quelconque des revendications 1 à 5, ***caractérisée en ce* qu'**elle comporte au moins un moyen de commande servant à relever et à abaisser ladite (chaque) barre de semis (20) par rapport à l'organe de référence (10) correspondant

7. Machine agricole combinée selon la revendication 6 prise en combinaison avec la revendication 4 ou 5, ***caractérisée en ce* que** le moyen de positionnement (42) est constitué d'un vérin hydraulique (42d) pour réaliser le moyen de commande.

8. Machine agricole combinée selon la revendication 7, ***caractérisée en ce* que** le vérin hydraulique (42d) comporte une tige (42a) réglable en longueur.

9. Machine agricole combinée selon la revendication 4 ou 5, ***caractérisée en ce* que** le bras d'appui (41) présente une extrémité coudée (41a) venant en appui contre la structure porteuse (11) de l'organe référence (10) correspondant.

10. Machine agricole combinée selon la revendication 9, ***caractérisée en ce* que** ladite structure porteuse (11) présente un moyen de retenue (11b) empêchant sensiblement un écartement entre l'extrémité coudée (41a) et la structure porteuse (11).

11. Machine agricole combinée selon l'une quelconque des revendications 1 à 10, ***caractérisée en ce* que** chaque structure de liaison (30) est constituée d'au moins deux bielles (31, 32) formant un quadrilatère.

12. Machine agricole combinée selon la revendication 11, ***caractérisée en ce* que** chaque structure de liaison (30) est constituée de deux paires de bielles (31, 32).

13. Machine agricole combinée selon la revendication 11 ou 12, ***caractérisée en ce* que** le(s) quadrilatère(s) est (sont) convergent(s) en un point de convergence respectif situé à une certaine distance devant la machine.

14. Machine agricole combinée selon la revendication 13, ***caractérisée en ce* que** le point de convergence est en sus situé dans le voisinage de la surface du sol à travailler de préférence quelque peu sous cette surface du sol

15. Machine agricole combinée selon l'une quelconque des revendications 1 à 14, ***caractérisée en ce* qu'**elle comporte deux parties repliables pour le transport sur route.

16. Machine agricole combinée selon la revendication 15, ***caractérisée en ce* que** chaque partie comprend un châssis (2), un organe de référence (10), une barre de semis (20) et un vérin hydraulique de repliage (3) permettant de basculer ladite partie entre une position de travail et une position de transport.

17. Machine agricole combinée selon la revendication 16, ***caractérisée en ce* que** le vérin hydraulique de repliage (3) est articulé entre le châssis (2) correspondant et le cadre (1) destiné à être accroché au relevage du tracteur.

18. Machine agricole combinée selon l'une quelconque des revendications 1 à 17, ***caractérisée en ce* que** le ( les) organe(s) de référence (10) est (sont) constitué(s) d'un rouleau de rappuyage s'étendant transversalement à la direction d'avance (A).

19. Machine agricole selon l'une quelconque des revendications 1 à 18, ***caractérisée en ce* que** les organes de travail du sol et le (les) châssis (2) constituent une herse rotative.

20. Machine agricole combinée selon l'une quelconque des revendications 1 à 19, ***caractérisée en ce* qu'**elle comporte une trémie en communication avec la (les) barre(s) de semis (20) par l'intermédiaire de moyens de transport de graines.

21. Machine agricole combinée selon la revendication 20, **caractérisée en ce que** la trémie est destinée à être montée sur le relevage frontal du tracteur.

22. Machine agricole combinée selon la revendication 21, **caractérisée en ce qu'**elle comporte au moins une tête de distribution (24) liée au cadre (1).

## Claims

1. Combined agricultural machine for working the soil and sowing comprising:
- a frame (1) intended to be attached to a tractor;
- at least one chassis (2) connected to the said frame (1);
- soil working units mounted on the chassis (2) which are at least partially held in position by at least one reference member (10) during work, the said reference member(s) (10) being mounted on a corresponding supporting structure (11) articulated on the respective chassis (2);
- at least one sowing bar (20) linked to the said chassis (2) with the aid of at least one linking structure (30) of the quadrilateral type;
- at least one support device (40) linked to the said (each) sowing bar (20) and intended to rest on the supporting structure (11) of the corresponding reference member (10) so as to limit the sowing depth of the said sowing bar (20),
***characterized in* that** the support device(s) (40) linked to the said (each) sowing bar (20) is (are) designed so as to produce a support point or points capable of sliding on a portion or portions (11a) of the supporting structure (11) of the reference member (10) corresponding to the said sowing bar (20).

2. Combined agricultural machine according to Claim 1, ***characterized in* that** the support point(s) can slide on a sectional portion(s) (11a) of the said supporting structure (11).

3. Combined agricultural machine according to Claim 1 or 2, ***characterized in* that** the said (each) sowing bar (20) comprises a support device (40) on either side of its linking structure (30).

4. Combined agricultural machine according to any one of Claims 1 to 3, ***characterized in* that** the support device (40) consists of an upright (28b) rigidly attached to the sowing bar (20), a support arm (41) on the one hand articulated on the said first upright (28b) and on the other hand resting against the supporting structure (11) of the corresponding reference member (10) and a positioning means (42) articulated between the support arm (41) and the upright (28b).

5. Combined agricultural machine according to Claim 4, ***characterized in* that** the positioning means (42) is a rod that is adjustable in length.

6. Combined agricultural machine according to any one of Claims 1 to 5, ***characterized in* that** it comprises at least one control means serving to raise and lower the said (each) sowing bar (20) in relation to the corresponding reference member (10).

7. Combined agricultural machine according to Claim 6 taken in combination with Claim 4 or 5, ***characterized in* that** the positioning means (42) consists of a hydraulic ram (42d) to form the control means.

8. Combined agricultural machine according to Claim 7, ***characterized in* that** the hydraulic ram (42d) comprises a rod (42a) that is adjustable in length.

9. Combined agricultural machine according to Claim 4 or 5, ***characterized in* that** the support arm (41) has a curved end (41a) coming into contact with the supporting structure (11) of the corresponding reference member (10).

10. Combined agricultural machine according to Claim 9, ***characterized in* that** the said supporting structure (11) has a retention means (11b) substantially preventing a gap from appearing between the curved end (41a) and the supporting structure (11).

11. Combined agricultural machine according to any one of Claims 1 to 10, ***characterized in* that** each linking structure (30) consists of at least two connecting rods (31, 32) forming a quadrilateral.

12. Combined agricultural machine according to Claim 11, ***characterized in* that** each linking structure (30) consists of two pairs of connecting rods (31, 32).

13. Combined agricultural machine according to Claim 11 or 12, ***characterized in* that** the quadrilateral(s) is (are) convergent at a respective point of convergence situated a certain distance in front of the machine.

14. Combined agricultural machine according to Claim 13, ***characterized in* that** the point of convergence is in addition situated close to the surface of the soil to be worked, preferably slightly below the surface of the soil.

15. Combined agricultural machine according to any one of Claims 1 to 14, ***characterized in* that** it comprises two folding parts for road transport.

16. Combined agricultural machine according to Claim 15, ***characterized in* that** each part comprises a chassis (2), a reference member (10), a sowing bar (20) and a hydraulic folding ram (3) enabling the said part to be tilted between a working position and a transport position.

17. Combined agricultural machine according to Claim 16, ***characterized in* that** the hydraulic folding ram (3) is articulated between the corresponding chassis (2) and the frame (1) intended to be attached to the lifting device of the tractor.

18. Combined agricultural machine according to any one of Claims 1 to 17, ***characterized in* that** the reference member(s) (10) consists or consist of a packer roll extending across the direction of travel (A).

19. Agricultural machine according to any one of Claims 1 to 18, ***characterized in* that** the soil working units and the chassis (2) constitute a rotary harrow.

20. Combined agricultural machine according to any one of Claims 1 to 19, ***characterized in* that** it comprises a hopper linked to the sowing bar(s) (20) via means of transporting seeds.

21. Combined agricultural machine according to Claim 20, ***characterized in* that** the hopper is intended to be mounted on the front lifting device of the tractor.

22. Combined agricultural machine according to Claim 21, ***characterized in* that** it comprises at least one distribution head (24) linked to the frame (1).

## Patentansprüche

1. Kombinierte Landmaschine zur Bodenbearbeitung und zum Säen, die
- ein Gestell (1), das an einem Traktor angehängt werden soll;
- mindestens einen mit dem Gestell (1) verbundenen Rahmen (2);
- an dem (den) Rahmen (2) angebrachte Bodenbearbeitungselemente, die im Betrieb durch mindestens ein Bezugselement (10) zumindest teilweise in Position gehalten werden, wobei das (die) Bezugselement(e) (10) an einer entsprechenden, am jeweiligen Gestell (2) angelenkten Tragkonstruktion (11) angebracht ist (sind);
- mindestens eine Säschiene (20), die mittels mindestens einer Vierecks-Verbindungskonstruktion (30) mit dem (den) Rahmen (2) verbunden ist;
- mindestens eine Stützvorrichtung (40), die mit der (jeder) Säschiene (20) verbunden ist und sich an der Tragkonstruktion (11) des entsprechenden Bezugselements (10) abstützen soll, so dass die Sätiefe der Säschiene (20) begrenzt wird,
umfasst, ***dadurch gekennzeichnet,* dass** die mit der (jeder) Säschiene (20) verbundene(n) Stützvorrichtung(en) (40) so ausgeführt ist (sind), dass ein Stützpunkt (mehrere Stützpunkte) realisiert wird (werden), der (die) an einem Teil (Teilen) (11a) der Tragkonstruktion (11) des dem Säbalken (20) entsprechenden Bezugselements (10) gleiten kann (können).

2. Kombinierte Landmaschine nach Anspruch 1, ***dadurch gekennzeichnet,* dass** der (die) Stützpunkt(e) an einem profilierten Teil (11a) (an profilierten Teilen) der Tragkonstruktion (11) gleiten kann (können).

3. Kombinierte Landmaschine nach Anspruch 1 oder 2, ***dadurch gekennzeichnet,* dass** die (jede) Säschiene (20) eine Stützvorrichtung (40) auf beiden Seiten seiner Verbindungskonstruktion (30) aufweist.

4. Kombinierte Landmaschine nach irgend einem der Ansprüche 1 bis 3, ***dadurch gekennzeichnet,* dass** die Stützvorrichtung (40) aus einer fest mit der Säschiene (20) verbundenen Stütze (28b), einem Stützarm (41), der einerseits an der ersten Stütze (28b) angelenkt ist und sich andererseits an der Tragkonstruktion (11) des entsprechenden Bezugselements (10) abstützt, und einem zwischen dem Stützarm (41) und der Stütze (28b) angelenkten Positioniermittel (42) besteht.

5. Kombinierte Landmaschine nach Anspruch 4, ***dadurch gekennzeichnet,* dass** es sich bei dem Positioniermittel (42) um eine in der Länge verstellbare Zugstange handelt.

6. Kombinierte Landmaschine nach irgend einem der Ansprüche 1 bis 5, ***dadurch gekennzeichnet,* dass** sie mindestens ein Betätigungsmittel aufweist, das zum Anheben und Absenken der (jeder) Säschiene (20) bezüglich des entsprechenden Bezugselements (10) dient.

7. Kombinierte Landmaschine nach Anspruch 6 in Kombination mit Anspruch 4 oder 5*,* ***dadurch gekennzeichnet*, dass** das Positioniermittel (42) aus einem Hydraulikzylinder (42d) besteht, um das Betätigungsmittel zu bilden.

8. Kombinierte Landmaschine nach Anspruch 7, ***dadurch gekennzeichnet,* dass** der Hydraulikzylinder (42d) eine in der Länge verstellbare Stange (42a) aufweist.

9. Kombinierte Landmaschine nach Anspruch 4 oder 5, ***dadurch gekennzeichnet,* dass** der Stützarm (41) ein gekrümmtes Ende (41a) aufweist, das an der Tragkonstruktion (11) des entsprechenden Bezugselements (10) zur Anlage kommt.

10. Kombinierte Landmaschine nach Anspruch 9, ***dadurch gekennzeichnet,* dass** die Tragkonstruktion (11) ein Haltemittel (11b) aufweist, das im Wesentlichen eine Beabstandung zwischen dem gekrümmten Ende (41a) und der Tragkonstruktion (11) verhindert.

11. Kombinierte Landmaschine nach irgend einem der Ansprüche 1 bis 10, ***dadurch gekennzeichnet,* dass** jede Verbindungskonstruktion (30) aus mindestens zwei Verbindungsstangen (31, 32) besteht, die ein Viereck bilden.

12. Kombinierte Landmaschine nach Anspruch 11, ***dadurch gekennzeichnet,* dass** jede Verbindungskonstruktion (30) aus zwei Paaren von Verbindungsstangen (31, 32) besteht.

13. Kombinierte Landmaschine nach Anspruch 11 oder 12, ***dadurch gekennzeichnet,* dass** das (die) Viereck(e) in einem jeweiligen Konvergenzpunkt zusammenläuft (zusammenlaufen), der sich in einem bestimmten Abstand vor der Maschine befindet.

14. Kombinierte Landmaschine nach Anspruch 13, ***dadurch gekennzeichnet,* dass** sich der Konvergenzpunkt des Weiteren in der Nähe der zu bearbeitenden Bodenoberfläche, vorzugsweise etwas unter dieser Bodenoberfläche, befindet.

15. Kombinierte Landmaschine nach irgend einem der Ansprüche 1 bis 14, ***dadurch gekennzeichnet,* dass** sie zwei klappbare Teile für den Straßentransport aufweist.

16. Kombinierte Landmaschine nach Anspruch 15, ***dadurch gekennzeichnet,* dass** jeder Teil einen Rahmen (2), ein Bezugselement (10), eine Säschiene (20) und einen Klapphydraulikzylinder (3), der das Schwenken des Teils zwischen einer Arbeitsstellung und einer Transportstellung gestattet, umfasst.

17. Kombinierte Landmaschine nach Anspruch 16, ***dadurch gekennzeichnet,* dass** der Klapphydraulikzylinder (3) zwischen dem entsprechenden Rahmen (2) und dem Gestell (1), der an der Hebevorrichtung des Traktors angehängt werden soll, angelenkt ist.

18. Kombinierte Landmaschine nach irgend einem der Ansprüche 1 bis 17, ***dadurch gekennzeichnet,* dass** das (die) Bezugselement(e) (10) aus einer Presswalze gebildet ist (sind), die sich quer zur Vorschubrichtung (A) erstreckt.

19. Kombinierte Landmaschine nach irgend einem der Ansprüche 1 bis 18, ***dadurch gekennzeichnet,* dass** die Bodenbearbeitungselemente und der (die) Rahmen (2) eine Kreiselegge bilden.

20. Kombinierte Landmaschine nach irgend einem der Ansprüche 1 bis 19, ***dadurch gekennzeichnet,* dass** sie einen Trichter aufweist, der über Saatgutbeförderungsmittel mit dem (den) Säbalken (20) in Verbindung steht.

21. Kombinierte Landmaschine nach Anspruch 20, ***dadurch gekennzeichnet,* dass** der Trichter an der vordere Hebevorrichtung des Traktors angebracht werden soll.

22. Kombinierte Landmaschine nach Anspruch 21, ***dadurch gekennzeichnet,* dass** sie mindestens einen mit dem Gestell (1) verbundenen Verteilkopf (24) aufweist.
